# EUROPÄISCHE PATENTSCHRIFT

(11) **EP 1 050 551 B1**
(45) Veröffentlichungstag und Bekanntmachung des Hinweises auf die Patenterteilung: **15.10.2003**
(21) Anmeldenummer: 00109022.4
(22) Anmeldetag: 27.04.2000
(51) Int. Cl.: C08G 18/62, C08G 18/70, C09D 175/04, C09D 5/08

(54) **Wässrige 2K-PUR-Systeme mit verbesserter Haftung und Korrosionsbeständigkeit**
Aqueous two component PUR systems with improved adhesion and corrosion resistance
Systèmes PUR à deux composants ayant une résistance à la corrosion et adhésion améliorée

(30) Priorität: 07.05.1999 DE 19921156
(43) Veröffentlichungstag der Anmeldung: 08.11.2000
(73) Patentinhaber: BAYER AG, 51368 Leverkusen (DE)
(72) Erfinder: Köhler, Burkhard, Dr., 51373 Leverkusen (DE); Probst, Joachim, Dr., 51375 Leverkusen (DE); Sonntag, Michael, Dr., 51377 Leverkusen (DE)

(56) Entgegenhaltungen:
- EP-A- 0 872 499
- US-A- 5 130 167

## Beschreibung

Die vorliegende Erfindung betrifft wäßrige 2K-PUR-Systeme mit verbesserter Haftung und Korrosionsbeständigkeit vorzugsweise auf metallischen Untergründen wie z.B. Aluminium, verzinktem Stahl und Karosserieblech und ein Verfahren zur deren Herstellung.

In der Oberflächentechnologie spielen ökologische Fragen eine bedeutende Rolle. Ein besonders vordringliches Problem ist hier die Reduzierung der für Lacke und Beschichtungsstoffe verwendeten Mengen organischer Lösemittel.

Aus der EP-A 0 358 979 ist bekannt, daß bei Verwendung von ausgewählten Polyhydroxylverbindungen auf Vinylpolymerisat-Basis als Reaktionspartner für organische Polyisocyanate mit freien Isocyanatgruppen wäßrige Zweikomponenten-Polyurethan-Systeme dadurch hergestellt werden können, daß man die Polyisocyanate mit freien Isocyanatgruppen in der wäßrigen Polymerisatlösung bzw. -dispersion emulgiert. Die z.B. in der EP-A 0358 979 beschriebenen Polyhydroxylverbindungen werden nach üblichen Polymerisationsverfahren, vorzugsweise in organischer Lösung radikalisch polymerisiert und dann anschließend in die wäßrige Lösung eines Neutralisationsmittels- meist Ammoniak oder tertiäre Amine - überführt und wäßrig gelöst bzw. dispergiert. Das organische Lösemittel kann dabei nach Bedarf im wäßrigen Milieu verbleiben oder destillativ entfernt werden.

Selbstverständlich sind auch wäßrige Emulsionspolymerisate, die gemäß dem Verfahren der radikalischen Emulsionspolymerisation herstellbar sind, für die 2K-PUR-Technologie geeignet (z.B. EP-A 496 210 und EP-A 557 844).

Bei diesen wäßrigen 2K-PUR-Systemen können jedoch nach Applikation auf speziellen Substratoberflächen, insbesondere unbehandelten Metalloberflächen wie z.B. Aluminium, verzinktem Stahl und Karosserieblech (USt 1405-Stahlblech), Haftungsprobleme auftreten. Diese können dann z.B. zu unerwünschten Korrosionserscheinungen führen.

Aus den EP-A 872 499 und EP-A 874 011 ist es bekannt, wäßrige 2K-PUR-Systeme durch Zugabe von Silanen mit isocyanatreaktiven Gruppen zu modifizieren bzw. mit dem Polyisocyanat umzusetzen und dadurch zu wäßrigen 2K-Systemen zu gelangen, die zu Beschichtungen mit guter Wasserbeständigkeit unter relativ milden Bedingungen führen bzw. zu Beschichtungen, die gegen Verschleiß bzw. Abnutzung als Straßenmarkierungen sehr beständig sind.

Bei eingehender Prüfung solcher 2K-PUR-Systeme insbesondere auf unbehandelten Metalloberflächen (z.B. Stahl) als Substrat zeigte sich, daß unter verschärften Bedingungen wie z. B. dem Kondenswassertest gemäß DIN 50 017 bzw. insbesondere dem Salzsprühtest gemäß DIN 53 167 die Beständigkeit der Beschichtungen auch in Gegenwart dieser isocyanatreaktiven Silane (z.B. Silane mit Amino-, Merkapto- oder Hydroxylgruppen) im allgemeinen nicht ausreichend ist. Es bestand daher die Aufgabe, solche Additive aufzufinden, die diese verschärften Tests bestehen.

Es wurde nun überraschenderweise gefunden, daß spezielle Silane mit Epoxidgruppen, die unter üblichen Bedingungen (d.h. bei Raumtemperatur und in Abwesenheit von Katalysatoren, die zur Bildung von Oxazolidinonen führen könnten) nicht mit Isocyanatgruppen reagieren, die Haftfestigkeit und die Korrosionsbeständigkeit von solchen wäßrigen 2K-PUR-Systemen insbesondere auf unbehandelten Metalloberflächen auch im Hinblick auf Kondenswasser- und Salzsprühtests auf ein sehr hohes Niveau anheben.

Gegenstand der vorliegenden Erfindung ist daher eine Bindemittelkombination aus
a) 30 bis 95 Gew.-% einer wäßrigen, hydroxyfunktionellen, säuregruppen-haltigen Harzdispersion,
b) 5 bis 70 Gew.-% einer Polyisocyanatkomponente mit einem Gehalt an freien Isocyanatgruppen von 5 bis 50 Gew.-% und einer Viskosität von 5 bis 10 000 mPa.s (bei 23°C und D = 40s⁻¹) und
c) 0,1 bis 10 Gew.-% einer Silankomponente der allgemeinen Formel (I) 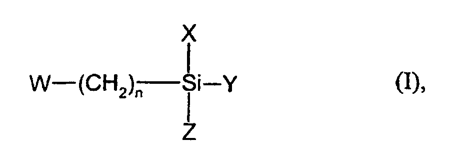 wobei
   - W: für die Reste 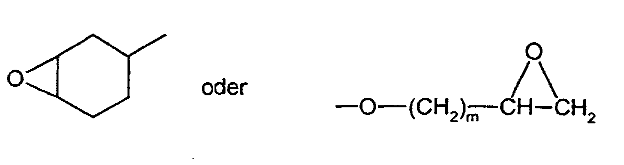 steht (mit m = 1 bis 4) und
   - n: für die Zahl von 2, 3 oder 4, vorzugsweise 2 und 3 steht und
   - X, Y, Z: unabhängig voneinander gleiche oder verschiedene organische Reste mit 1 bis 30 C-Atomen darstellen, mit der Maßgabe, daß mindestens einer der Reste eine Alkoxygruppe mit 1 bis 4 Kohlenstoffatomen darstellt,
dadurch gekennzeichnet, daß das molare Verhältnis der Hydroxylgruppen der Komponente a) zu den Isocyanatgruppen der Komponente b) zwischen 0,2 : 1 und 3 : 1 liegt und wobei die Summe der Gew.-% von a) bis c) 100 ergibt.

Ein weiterer Gegenstand der Erfindung ist auch die Verwendung der erfindungsgemäßen Bindemittelkombinationen zur Beschichtung beliebiger Substrate, vorzugsweise metallischer Untergründe.

Als Komponente a) können alle in der wäßrigen Zweikomponenten-Polyurethanbeschichtungstechnologie üblichen hydroxyfunktionellen, säuregruppen-haltigen Harzdispersionen eingesetzt werden. Derartige Harze und die Verfahren zur Herstellung dieser Harze sind literaturbekannt. So können die Harze z.B. aus der Klasse der Polyester, Vinylpolymeren, Polyurethane, Polyharnstoffe, Polycarbonate oder Polyether aufgebaut sein. Auch der Einsatz von beliebigen Hybriddispersionen oder beliebigen Mischungen verschiedener Dispersionen ist möglich. In der Regel sind die Harze hydroxyfunktionell.

Bevorzugt sind Harzdispersionen mit Hydroxylzahlen von 8 bis 264 mg KOH/g Festharz und Säurezahlen von 3 bis 100 mg KOH/g Festharz.

Bei der Härterkomponente b) handelt es sich um beliebige organische Polyisocyanate mit aliphatisch, cycloaliphatisch, araliphatisch und/oder aromatisch gebundenen freien Isocyanatgruppen mit einer mittleren NCO-Funktionalität von 2,0 bis 5,0, bevorzugt 2,2 bis 4,0.

Der Einsatz von Polyisocyanathärtern in wäßrigen 2K-PUR-Beschichtungen ohne Silanzusatz ist bekannt. Sehr gut geeignet sind z.B. "Lackpolyisocyanate" auf Basis von Hexamethylendiisocyanat (HDI), von 1-Isocyanato-3,3,5-trimethyl-5-isocyanatomethyl-cyclohexan (IPDI) und/oder Bis(isocyanatocyclohexyl)-methan oder anderer aliphatischer Diisocyanate oder Mischungen dieser Diisocyanate. Unter "Lackpolyisocyanaten" auf Basis von Diisocyanaten sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation, von überschüssigem Ausgangsdiisocyanat bis auf einen Restgehalt von weniger als 0,5 % befreit worden sind. Verfahren zur Herstellung derartiger "Lackpolyisocyanate" sind beispielsweise in den US-Patentschriften 31 24 605, 33 58 010, 39 03 126, 39 03 127, 39 76 622 oder 43 24 879 beschrieben.

Möglich ist auch der Einsatz aromatischer Polyisocyanate, z.B. "Lackpolyisocyanate" auf Basis von 4,4'-Diisocyanatodiphenylmethan bzw. dessen Gemischen mit seinen Isomeren und/oder höheren Homologen. Grundsätzlich möglich ist selbstverständlich auch der Einsatz beliebiger Gemische der beispielhaft genannten Polyisocyanate.

Um eine bessere Einarbeitbarkeit der Härter zu ermöglichen, können in Zweikomponenten-Polyurethanbeschichtungen auch hydrophilierte Polyisocyanate alleine oder in Mischung mit den oben beschriebenen nicht hydrophilierten Polyisocyanaten eingesetzt werden. Die Hydrophilierung kann z.B. anionisch, kationisch oder nichtionisch über interne oder externe Emulgatoren wie Polyether erfolgen. Derartige Polyisocyanate werden z.B. in den EP-A 443 138, EP-A 469 389, EP-A 486 881, EP-A 510 438, EP-A 540 985, EP-A 645 410, EP-A 697 424, EP-A 728 785 und der deutschen Patentanmeldung DE 19 822 891.0 beschrieben.

Bei der Silankomponente der Formel (I) ist von Bedeutung, daß sie nichtreaktiv mit Isocyanatgruppen, jedoch über ihre Epoxygruppen reaktiv mit Säuregruppen der Harzdispersionen ist.

Beispiele für geeignete epoxyfunktionelle Alkoxysilanverbindungen sind (3-Glycidoxypropyl)trimethoxysilan, (3-Glycidoxypropyl)triethoxysilan, (3-Glycidoxypropyl)triisopropoxysilan, β-(3,4-Epoxycyclohexyl)ethyltrimethoxysilan und β-(3,4-Epoxycyclohexyl)ethyl-triethoxysilan. Besonders bevorzugt sind hierbei die Silane mit Methoxygruppen als Alkoxygruppen, z.B. (3-Glycidoxypropyl)trimethoxysilan und β-(3,4-Epoxycyclohexyl)ethyltrimethoxysilan.

Ganz besonders bevorzugt ist der Einsatz von (3-Glycidoxypropyl)trimethoxysilan in Konzentrationen von 0,2 bis 3,0 % bezogen auf die Summe des Feststoffgehalts der Harzdispersion und des Polyisocyanats.

Das molare Verhältnis der Hydroxylgruppen der Komponente a) zu den Isocyanatgruppen der Komponente b) liegt von 0,2 : 1 bis 3 : 1, bevorzugt von 0,5 : 1 bis 2 : 1.

Die Vernetzerkomponente b) weist bei 23°C im allgemeinen eine Viskosität von 5 bis 10000, vorzugsweise 5 bis 2000 mPa.s (bei D = 40s⁻¹) auf. Falls erforderlich können die Polyisocyanate mit geringen Mengen an inerten Lösemitteln abgemischt werden, um die Viskosität auf einen Wert innerhalb der genannten Bereiche abzusenken. Die Menge derartiger Lösemittel wird jedoch maximal so bemessen, daß in den letztendlich erhaltenen erfindungsgemäßen Beschichtungsmitteln maximal 20 Gew.-%, bevorzugt 10 Gew.-%, Lösemittel vorliegt, wobei auch das gegebenenfalls in den Harzdispersionen a) noch vorliegende Lösemittel mit in die Berechnung eingeht. Als Lösemittel geeignet sind beispielsweise aliphatische oder aromatische Kohlenwasserstoffe wie Toluol, Xylol, Solventnaphtha oder beispielsweise N-Methylpyrrolidon, Diethylenglykoldimethylether, Dipropylenglykoldimethylether, Butylglykol, Aceton, Methylethylketon, Methylisobutylketon, Ethylacetat, n-Butylacetat, Methoxypropylacetat, Methoxybutylacetat oder Mischungen dieser oder anderer inerter Lösemittel.

Zur Herstellung der wäßrigen Bindemittelkombination wird die Härterkomponente b) in der wäßrigen Harzkomponente a) emulgiert. Vor der Zugabe der Komponente b) wird jedoch die Silankomponente c) entweder in der wäßrigen Harzkomponente a) emulgiert oder in der Härterkomponente b) gelöst. Bevorzugt ist die Zugabe der Silankomponente c) zu der Polyisocyanatkomponente b); hiermit wird eine vorzeitige Reaktion der Silankomponente c) in der wäßrigen Harzdispersion a) vermieden.

Um die Reaktivität der Silankomponente c) bei der Applikation zu erhöhen, ist eine Zugabe von Katalysatoren auf Titan- bzw. Zinnorganischer Basis gemäß der US-A 562 1038 möglich. Hierbei ist allerdings zu berücksichtigen, daß die Reaktivität der Isocyanatgruppen im wäßrigen 2K-PUR-System durch diese Katalysatoren ebenfalls erhöht wird. Bevorzugt ist daher ein Einsatz dieser Katalysatoren in einer Konzentration von höchstens 1,0 Gew.-% bezogen auf die Summe der Feststoffgehalte der Komponenten a) - c). Vorzugsweise wird die Silankomponente c) ohne Einsatz von Katalysatoren appliziert.

Vor der bevorzugten Zugabe der Härterkomponente b) in Abmischung mit der Silankomponente c) zu der Polymerkomponente a) können der Komponente a) oder b) und c) die üblichen Hilfs- und Zusatzmittel der Lacktechnologie einverleibt werden.

Hierzu gehören beispielsweise Entschäumer, Verdicker, Verlaufshilfsmittel, Pigmente, Dispergiermittel und Lösemittel. Mit Wasser wird die erforderliche Verarbeitungsviskosität eingestellt.

In den meisten Fällen reichen einfache Emulgiertechniken z.B. mit einem mechanischen Rührer oder oftmals auch eine einfache Mischung der Komponenten a), b) und c) per Hand aus, um Beschichtungen mit sehr guten Eigenschaften zu erreichen. Selbstverständlich können aber auch Mischtechniken mit höherer Scherenergie, wie z.B. der Strahldispergierung, wie sie in Farbe & Lack 102/1, 1996, S. 88 bis 100, beschrieben wird, eingesetzt werden.

Die so erhaltenen erfindungsgemäßen Beschichtungsmittel eignen sich insbesondere für unvorbehandelte Stahloberflächen (Aluminium, verzinkter Stahl, Karosserie-Stahlblech) als pigmentierte oder nicht pigmentierte Grundierungen und Füller z.B. im Bereich der Industrielackierung, Automobilerst- oder Autoreparaturlackierung.

Die Herstellung der Beschichtungen kann nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Streichen, Rollen oder Rakeln erfolgen.

Die Trocknung und Aushärtung der Beschichtung erfolgt im allgemeinen unter normalen Temperaturbedingungen bei 5 bis 40°C, d. h. ohne Erhitzung der Beschichtung. Die erfindungsgemäße Bindemittelkombination kann jedoch auch zur Herstellung von Beschichtungen eingesetzt werden, die nach Applikation bei erhöhter Temperatur von 40 bis 150°C getrocknet und ausgehärtet werden.

### Beispiele

### Verwendete Polyisocyanate

### Polyisocyanat 1

1,0 val eines Isocyanuratgruppenhaltigen Polyisocyanates auf Basis von 1,6-Diisocyanatohexan (HDI) mit einem NCO-Gehalt von 21,5 %, einer mittleren NCO-Funktionalität von ca. 3,8 und einer Viskosität von 3000 mPa.s (23°C) werden bei Raumtemperatur unter Rühren mit 0,08 Val eines auf Methanol gestarteten, monofunktionellen Polyethylenoxidpolyethers mit einem mittleren Molekulargewicht von 350 versetzt und anschließend für 3 h auf 100°C erwärmt. Nach Abkühlen auf Raumtemperatur liegt ein praktisch farbloses klares Polyisocyanatgemisch vor. Der NCO-Gehalt beträgt 17,3 %, der Gehalt an Ethylenoxideinheiten beträgt 11,3 % und die Viskosität 3050 mPa.s (23°C).

### Polyisocyanat 2 (gemäß der Deutschen Patentanmeldung DE 19 822 891.0)

850 g (4,39 val) eines Isocyanuratgruppenhaltigen Polyisocyanates auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPa.s (23°C) werden bei 100°C unter trockenem Stickstoff und Rühren vorgelegt, innerhalb von 30 min mit 150 g (0,30 val) eines auf Methanol gestarteten, monofunktionellen Polyethylenoxidpolyethers eines mittleren Molekulargewichtes von 500, entsprechend einem NCO/OH-Äquivalentverhältnis von 14,6 : 1, versetzt und anschließend bei dieser Temperatur weitergerührt, bis der NCO-Gehalt der Mischung nach etwa 2 h auf den einer vollständigen Urethanisierung entsprechenden Wert von 17,2 % gefallen ist. Durch Zugabe von 0,01 g Zink(II)-2-ethyl-1-hexanoat wird die Allophanatisierungsreaktion gestartet. Dabei steigt die Temperatur des Reaktionsgemisches aufgrund der freiwerdenden Reaktionswärme bis auf 106°C an. Nach Abklingen der Exothermie, etwa 30 min nach Katalysatorzugabe, wird die Reaktion durch Zugabe von 0,01 g Benzoylchlorid abgebrochen und das Reaktionsgemisch auf Raumtemperatur abgekühlt. Es liegt ein praktisch farbloses klares Polyisocyanatgemisch mit folgenden Kenndaten vor:

| | |
|---|---|
| Festgehalt | 100 % |
| NCO-Gehalt | 16,0 % |
| NCO-Funktionalität | 4,0 |
| Viskosität (23°C) | 3200 mPa.s |

### Polyisocyanat 3 (Desmodur N 3600, Bayer AG)

Isocyanuratgruppenhaltiges Polyisocyanat auf Basis von 1,6-Diisocyanatohexan mit einem NCO-Gehalt von 23,5 %, einer mittleren NCO-Funktionalität von ca. 3,2 und einer Viskosität von 1200 mPa.s (23°C)

### Polyisocyanat 4 (Bayhydur VPLS 2150/1, Bayer AG)

Isocyanuratgruppenhaltiges, mit Polyethergruppen hydrophiliertes Polyisocyanat auf Basis von 1-Isocyanato-3,3,5-trimethyl-5-isocyanatomethylcyclohexan, 70 %ig gelöst in einem Gemisch von Methoxyproylacetat und Xylol (Gewichtsverhältnis 1 : 1), mit einem NCO-Gehalt von 9,4 % (bez. Lieferform), einer mittleren NCO-Funktionalität von ca. 3,0 und einer Viskosität von 700 mPa.s (23°C).

### Polyacrylat 1 (Sekundärdispersion) (Bayhydrol VPLS 2235/1, Bayer AG)

Polyacrylat gemäß EP-A 358 979 (US 5 075 370) auf Basis folgender Comonomerer: Methacrylsäure-2-hydroxyethylester, Acrylsäure, Methacrylsäuremethylester und Acrylsäure-n-butylester, mit einem Feststoffgehalt von ca. 46 %, einem OH-Gehalt von 3,3 % bezüglich Festharz, einer Säurezahl von ca. 21 mg KOH/g Festharz, einem pH-Wert von 8,0 und einer Viskosität von ca. 800 mPa.s (23°C, D = 40s⁻¹ gemessen in einem Rotationsviskosimeter der Firma Haake bei einem Schergefälle von D = 40s⁻¹); Neutralisationsmittel : N-Dimethylamino-ethanol.

### Polyacrylat 2 (Primärdispersion) (Bayhydrol VPLS 2250, Bayer AG)

Polyacrylat gemäß EP 358979 auf Basis folgender Comonomerer: Methacrylsäurehydroxypropylester, Acrylsäure, Methacrylsäuremethylester und Acrylsäure-n-butylester, mit einem Feststoffgehalt von ca. 42 %, einem OH-Gehalt von 2,0 % bezüglich Festharz, einer Säurezahl von ca. 28 mg KOH/g Festharz, einem pH-Wert von 7,3 und einer Viskosität von ca. 300 mPa.s (23°C, D = 40s⁻¹); Neutralisationsmittel : Ammoniak.

### Polyacrylat 3 (Primärdispersion) (Bayhydrol VPLS 2318, Bayer AG)

Polyacrylat wie Beispiel 2, jedoch mit N-Dimethylaminoethanol als Neutralisationsmittel; Feststoffgehalt: 43,2 %; Säurezahl : ca. 28 mg KOH/g Festharz; pH-Wert : 7,5; Viskosität: ca. 400 mPa.s (23°C, D = 40s⁻¹).

### Polyurethan 1 (Bayhydrol VPLS 2917, Bayer AG)

Wäßrige Dispersion eines fettsäuremodifizierten, hydrolysestabilen Polyurethanharzes mit einem Feststoffgehalt von ca. 45 %, einer Säurezahl von ca. 30 mg KOH/g Festharz, einem pH-Wert von ca. 7,0 und einer Viskosität von ca. 800 mPa.s (23°C, D = 40s⁻¹); Neutralisationsmittel : Triethylamin.

In den nachfolgenden anwendungstechnischen Beispielen 1 a) bis 4 b) sind die Mengenangaben in Gewichtsteilen ausgedrückt. Es werden jeweils anwendungstechnische Prüfungen ohne und mit Epoxysilan durchgeführt und miteinander verglichen.

Die in den folgenden Tabellen angegebenen Komponenten 1 und 2 wurden per Hand für ca. 15 s mittels eines Holzspatels sehr intensiv gemischt.

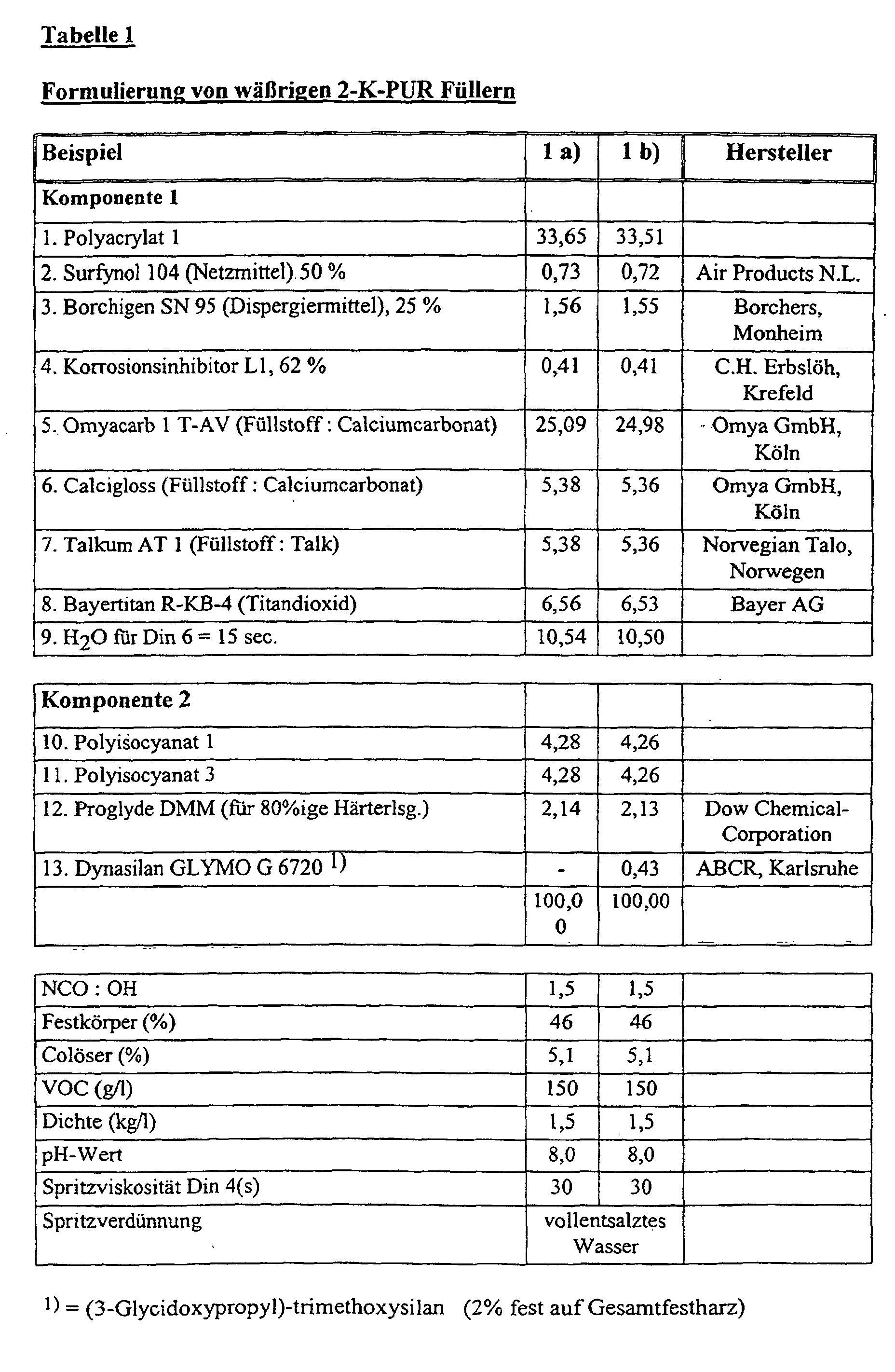

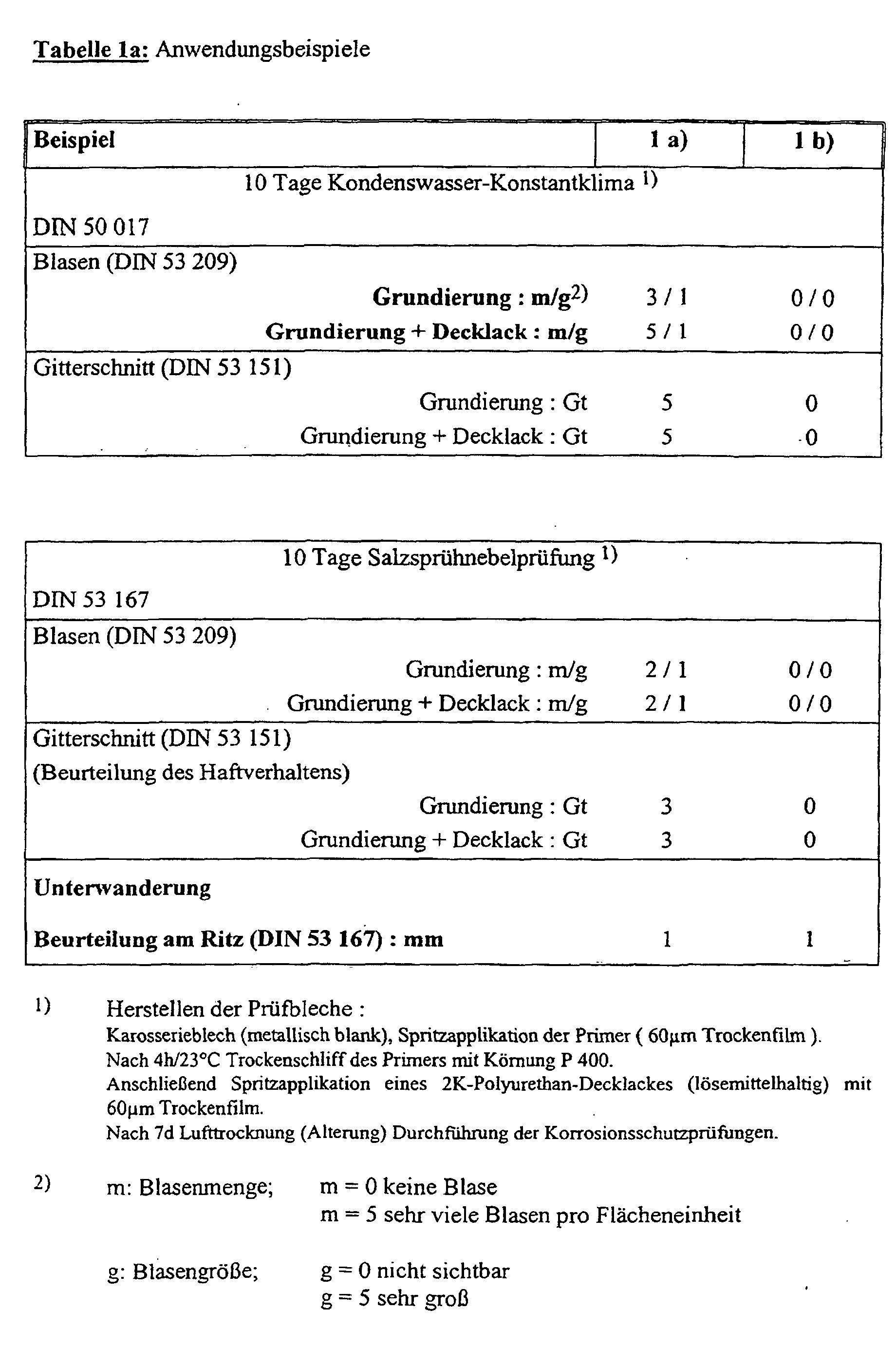

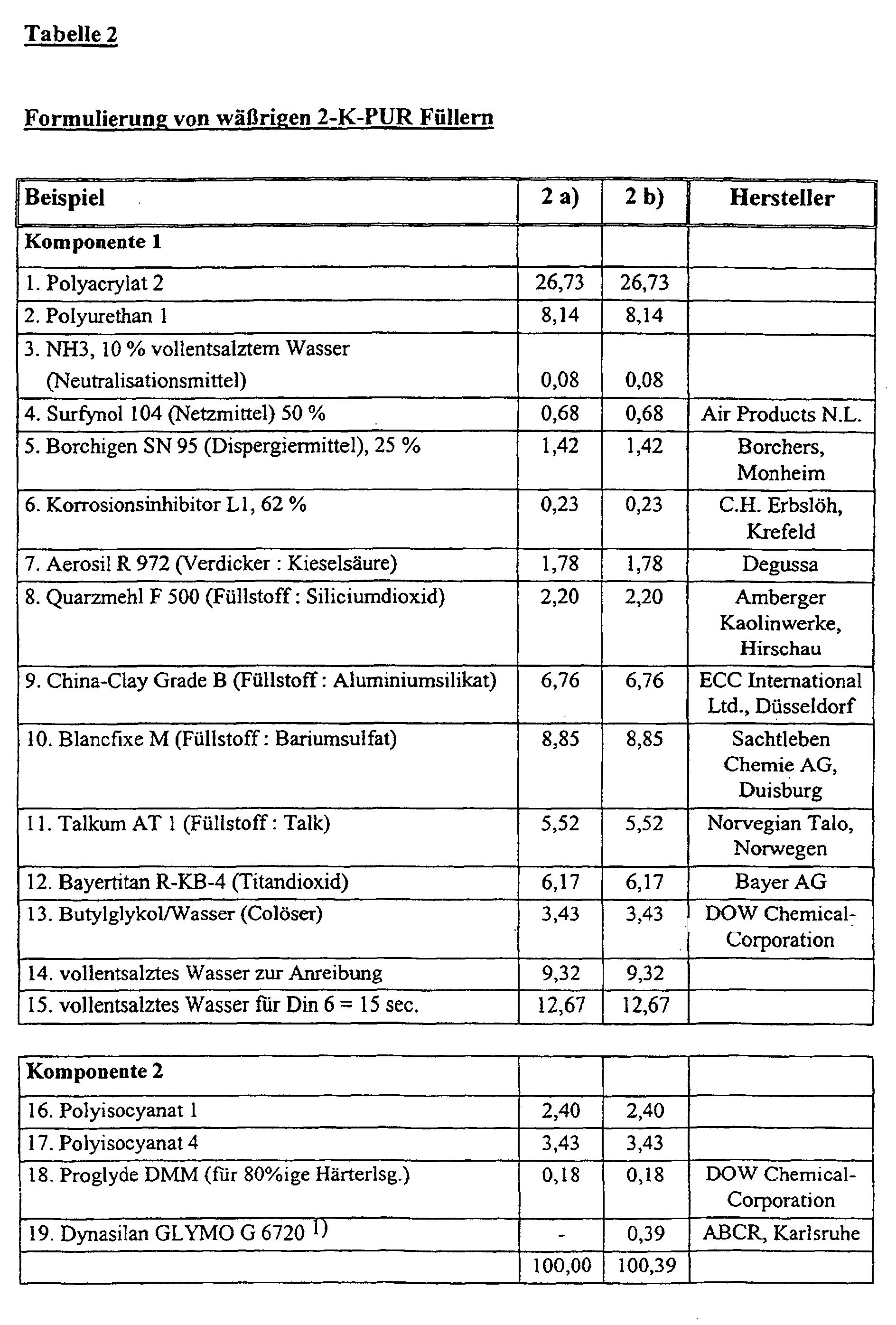

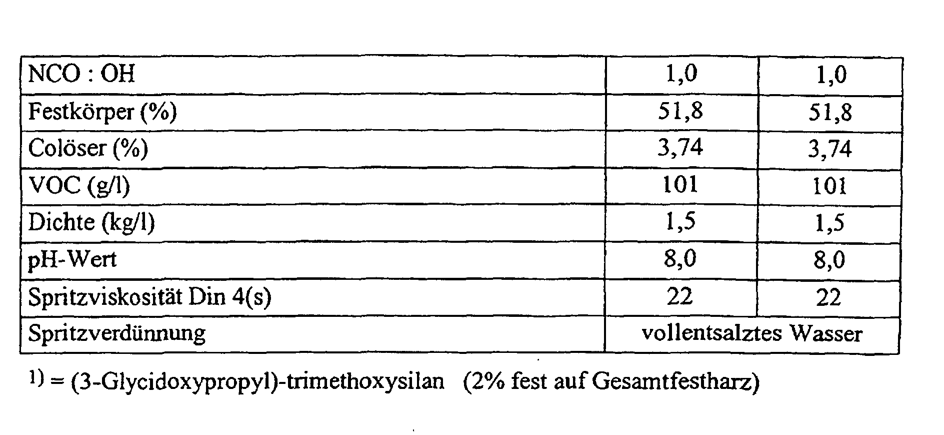

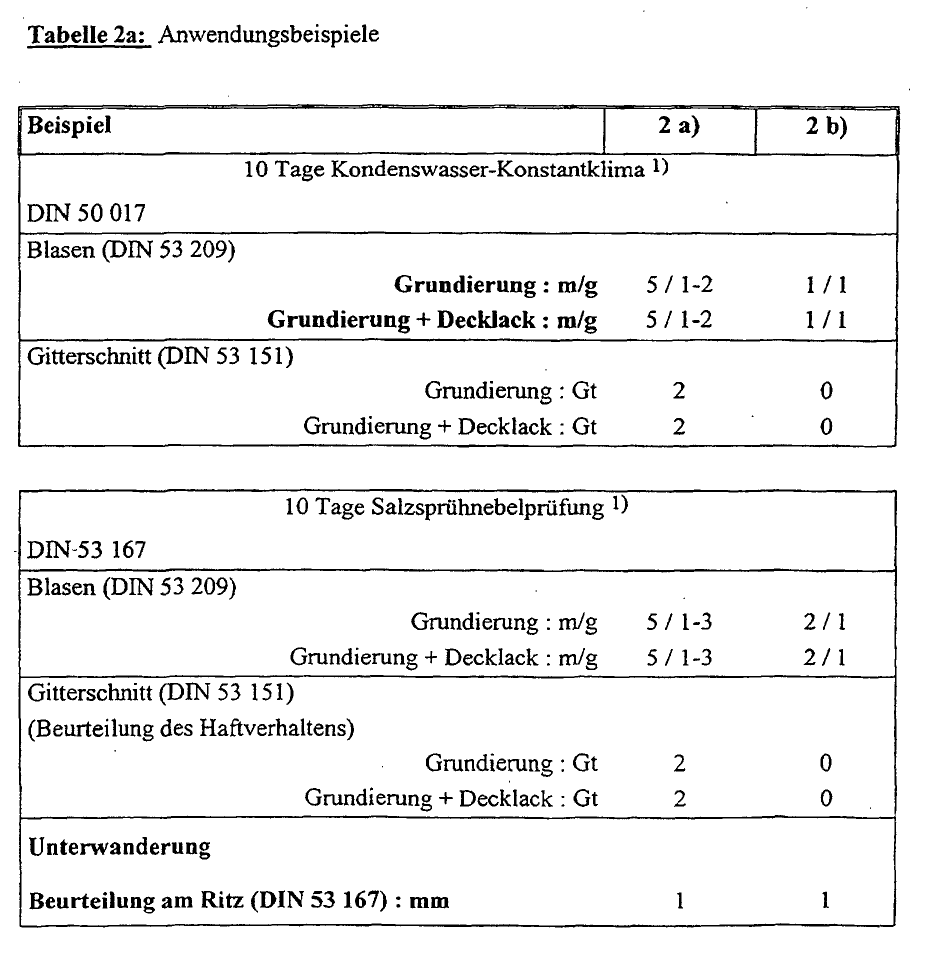

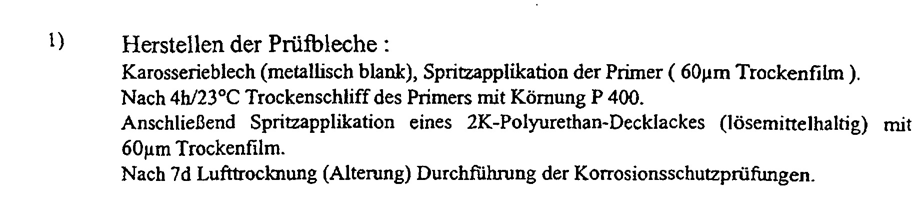

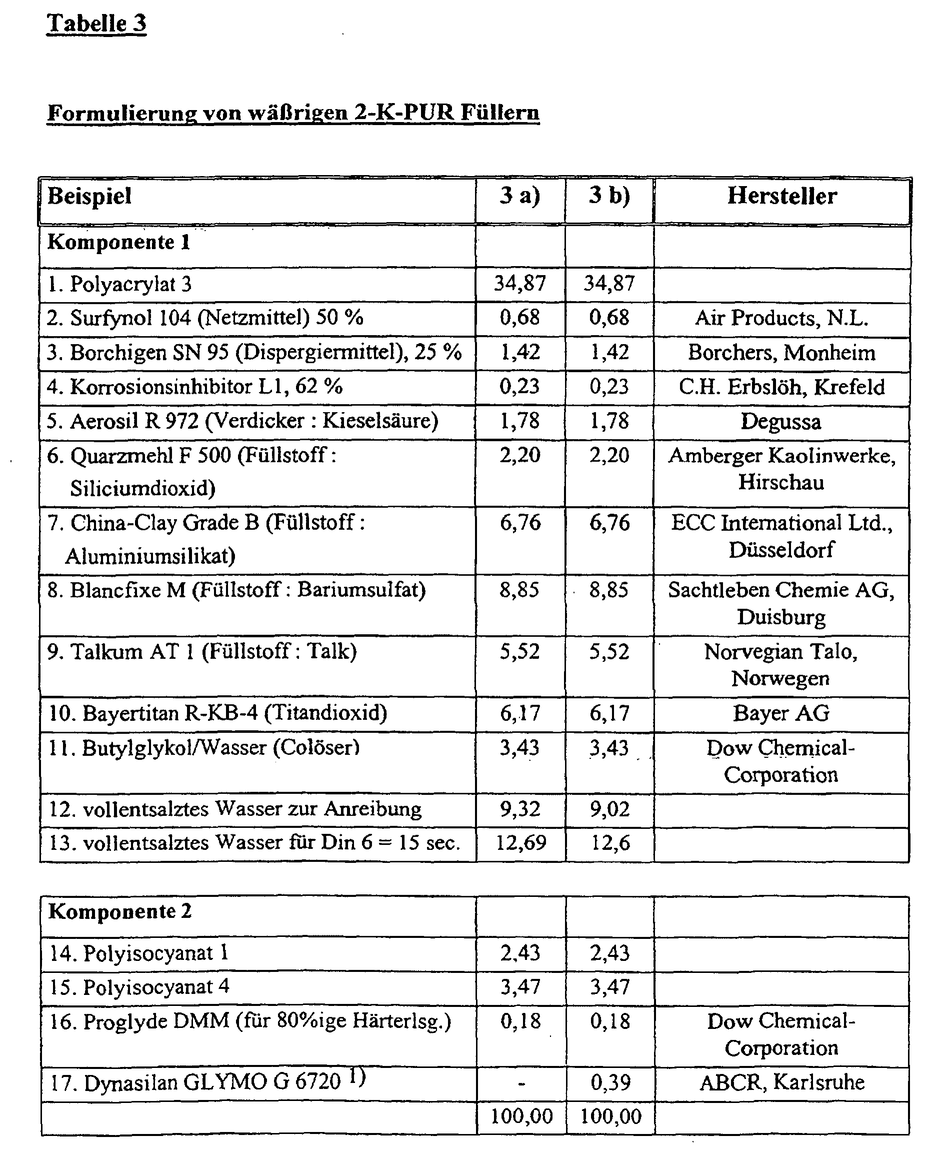

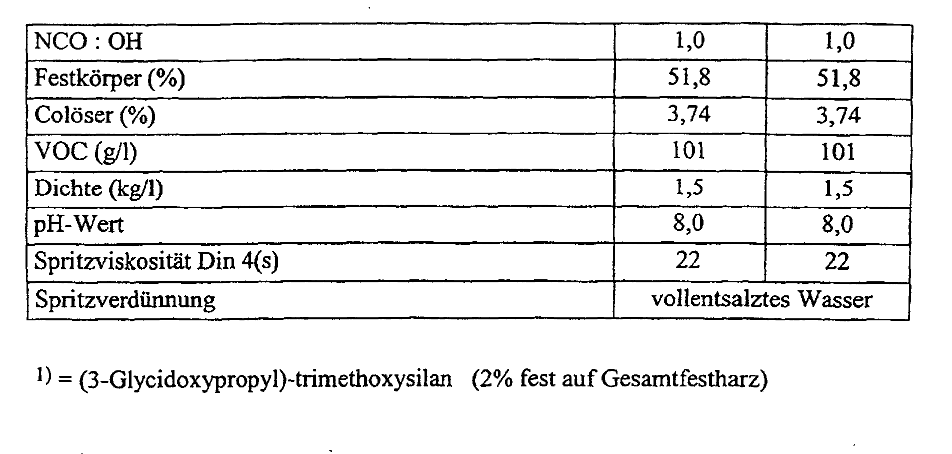

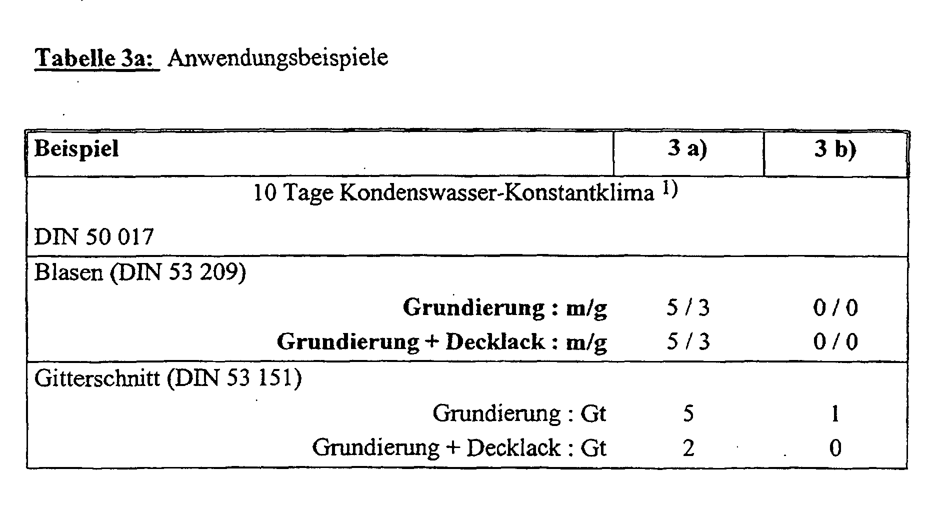

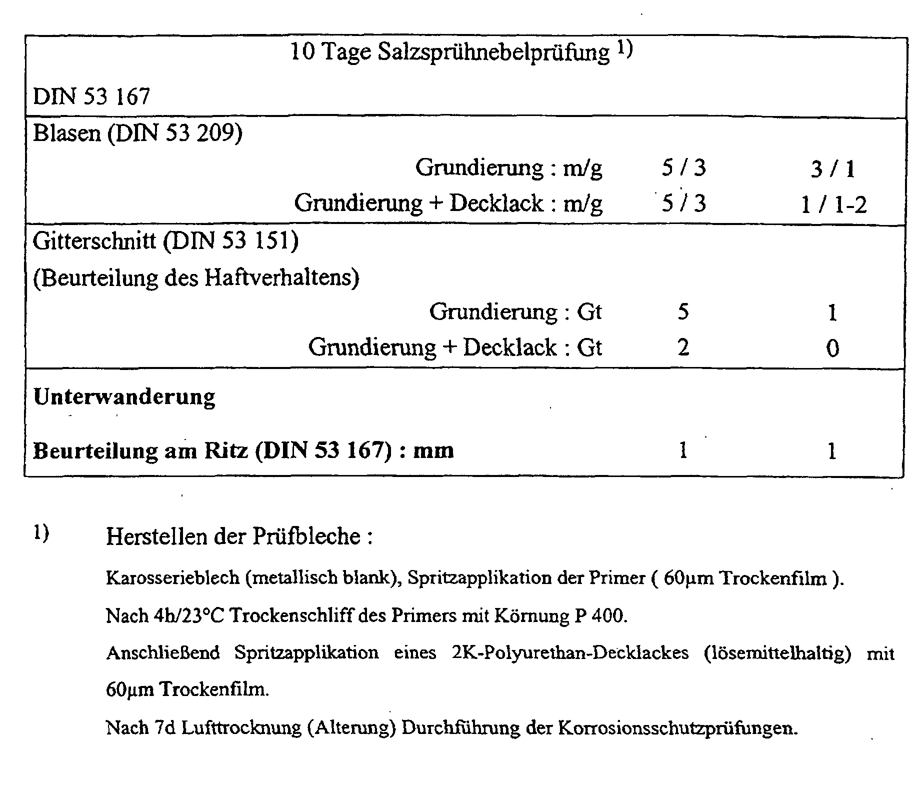

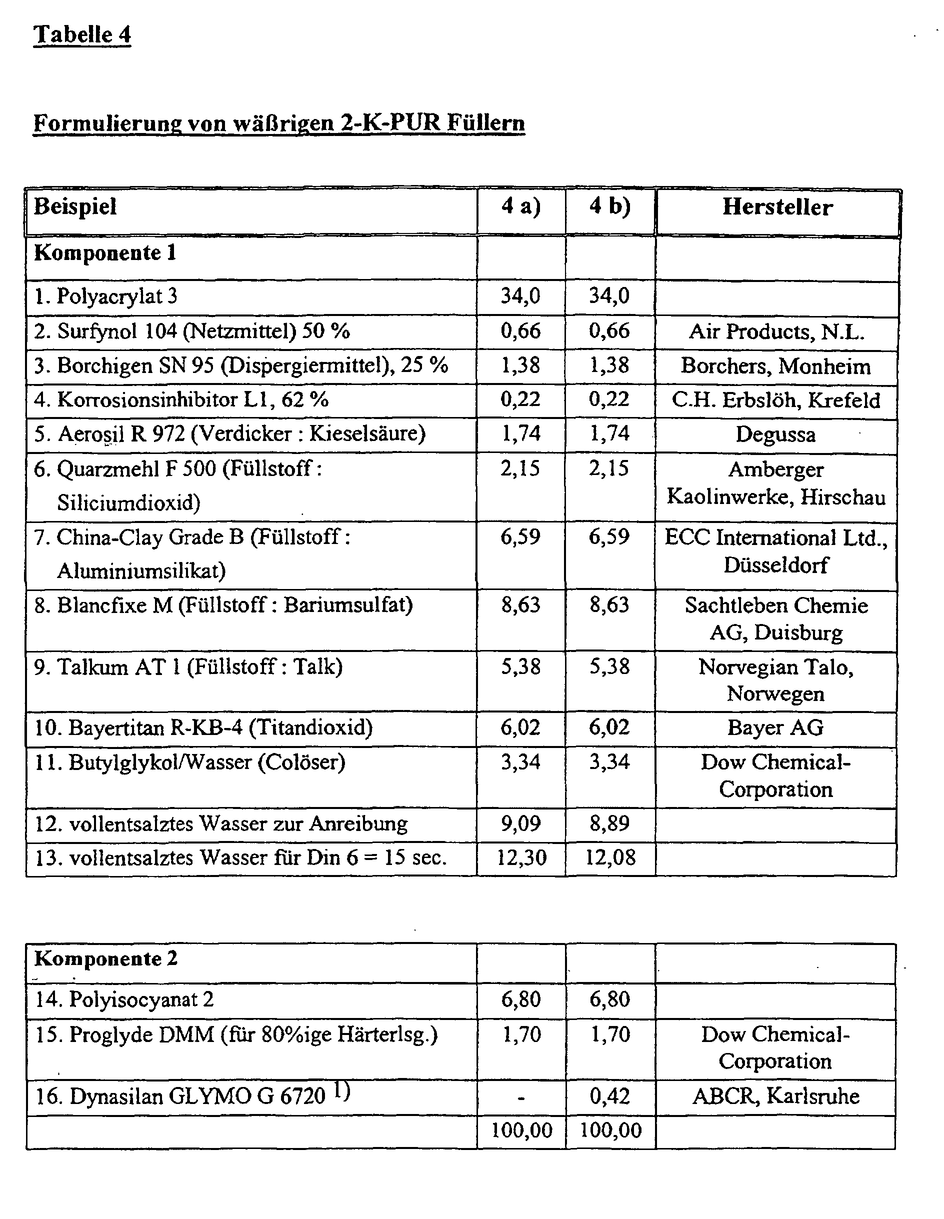

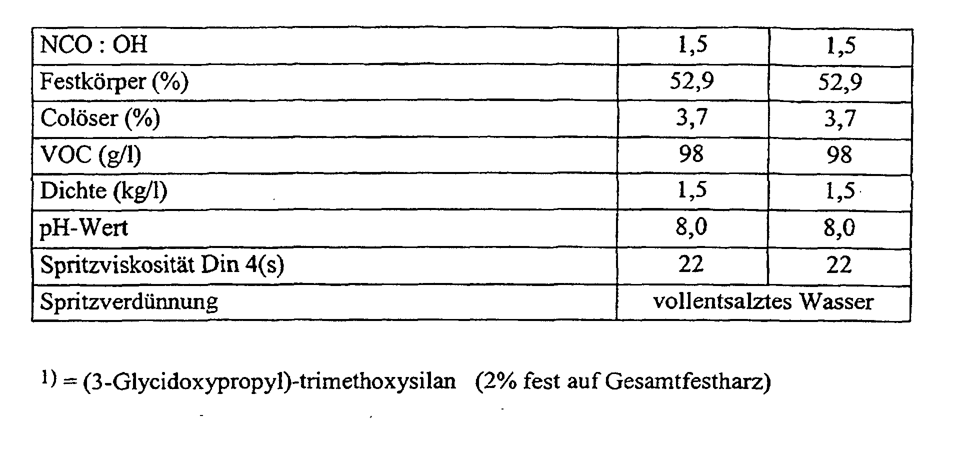

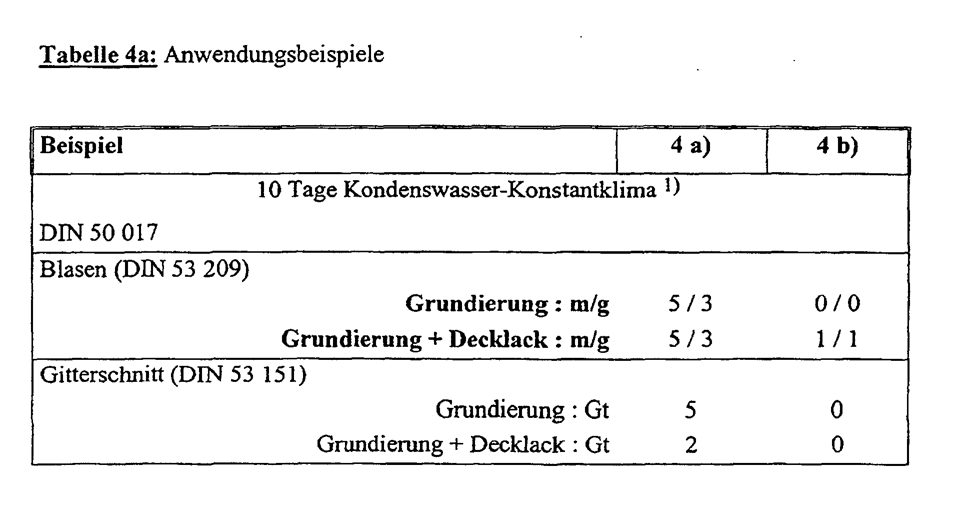

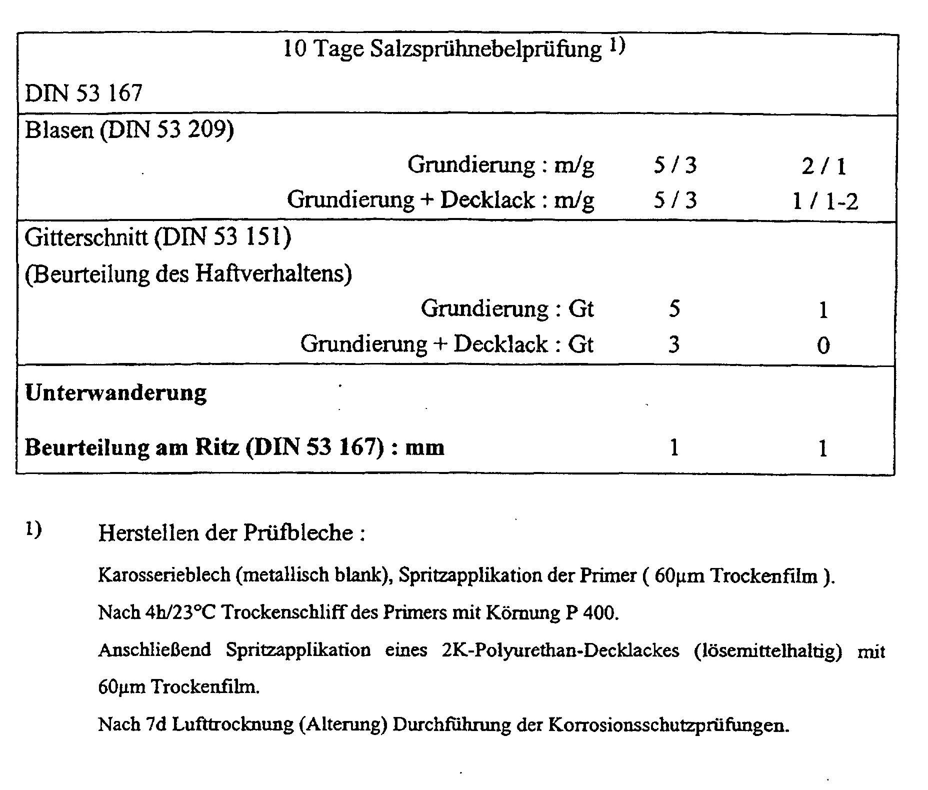

## Patentansprüche

1. Bindemittelkombination aus
a) 30 bis 95 Gew.-% einer wäßrigen, hydroxyfunktionellen, säuregruppen-haltigen Harzdispersion,
b) 5 bis 70 Gew.-% einer Polyisocyanatkomponente mit einem Gehalt an freien Isocyanatgruppen von 5 bis 50 Gew.-% und einer Viskosität von 5 bis 10 000 mPa.s (bei 23°C und D = 40s⁻¹) und
c) 0,1 bis 10 Gew.-% einer Silankomponente der allgemeinen Formel (I) 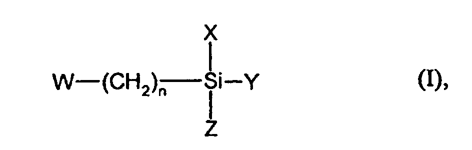 wobei
W für die Reste 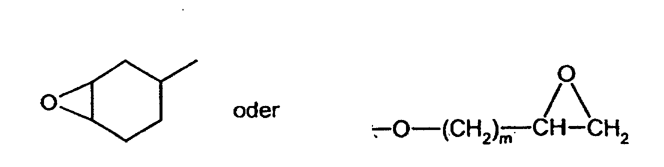 steht (mit m = 1 bis 4) und
n für eine ganze Zahl von 2-4 steht
und
X, Y, Z unabhängig voneinander gleiche oder verschiedene organische Reste mit 1 bis 30 C-Atomen darstellen, mit der Maßgabe, daß mindestens einer der Reste eine Alkoxygruppe mit 1 bis 4 Kohlenstoffatomen darstellt,
**dadurch gekennzeichnet, daß** das molare Verhältnis der Hydroxylgruppen der Komponente a) zu den Isocyanatgruppen der Komponente b) zwischen 0,2 : 1 und 3 : 1 liegt und wobei die Summe der Gew.-% von a) bis c) 100 ergibt.

2. Bindemittelkombinationen gemäß Anspruch 1, **dadurch gekennzeichnet, daß** in der Silankomponente c) der allgemeinen Formel (I) 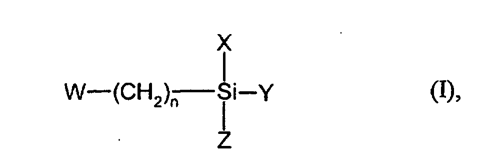
W für den Rest 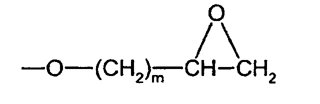
n für 3 und
X, Y, Z unabhängig voneinander für Methoxy- bzw. Ethoxygruppen stehen.

3. Bindemittelkombinationen gemäß Anspruch 1, **dadurch gekennzeichnet, daß** die Silankomponente c) (3-Glycidoxypropyl)trimethoxysilan ist.

4. Bindemittelkombination gemäß Anspruch 1, **dadurch gekennzeichnet, daß** in der Silankomponente c) der allgemeinen Formel (I) 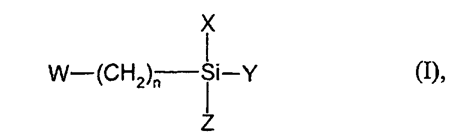
W für den Rest 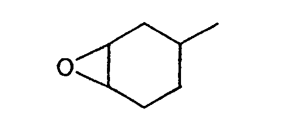
n für 2 und
X, Y, Z unabhängig voneinander für Methoxy- bzw. Ethoxygruppen stehen.

5. Verwendung der Bindemittelkombination gemäß Anspruch 1 zur Herstellung von Beschichtungen auf beliebigen Substraten.

6. Verwendung der Bindemittelkombination gemäß Anspruch 1 zur Beschichtung metallischer Untergründe.

7. Herstellung der Bindemittelkombination aus den Komponenten a) bis c) gemäß Anspruch 1, **dadurch gekennzeichnet, daß** die Silankomponente c) zur Polyisocyanatkomponente b) zugesetzt wird, bevor die Dispergierung der Mischung von b) und c) mit der wäßrigen, hydroxyfunktionellen, säuregruppen-haltigen Harzdispersion a) erfolgt.

## Claims

1. Binder combination comprising
a) from 30 to 95% by weight of an aqueous, hydroxy-functional resin dispersion containing acid groups,
b) from 5 to 70% by weight of a polyisocyanate component having a free isocyanate group content of from 5 to 50% by weight and a viscosity of from 5 to 10,000 mPa.s (at 23°C and D = 40 s⁻¹) and
c) from 0.1 to 10% by weight of a silane component of the general formula (I) 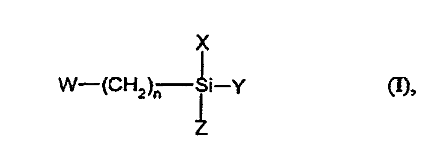 where
W is the radicals 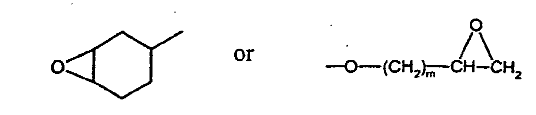 (with m = 1 to 4) and
n is an integer 2 - 4
and
X, Y and Z independently of one another are identical or different organic radicals having 1 to 30 carbon atoms, with the proviso that at least one of the radicals is an alkoxy group having 1 to 4 carbon atoms,
**characterized in that** the molar ratio of the hydroxyl groups of component a) to the isocyanate groups of component b) is between 0.2:1 and 3:1, the sum of the weight percentages of a) to c) being 100.

2. Binder combinations according to Claim 1, **characterized in that** in the silane component c) of the general formula (I) 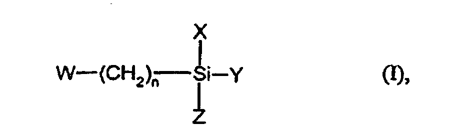
W is the radical 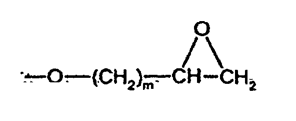
n is 3 and
X, Y and Z independently of one another are each methoxy or ethoxy groups.

3. Binder combinations according to Claim 1, **characterized in that** the silane component c) is (3-glycidyloxypropyl)trimethoxysilane.

4. Binder combination according to Claim 1, **characterized in that** in the silane component c) of the general formula (I) 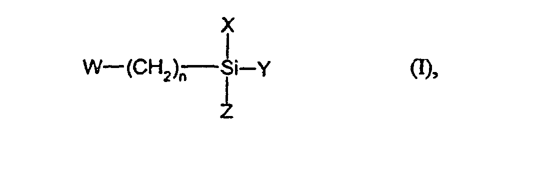
W is the radical 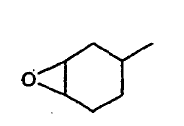
n is 2 and
X, Y and Z independently of one another are each methoxy or ethoxy groups.

5. Use of the binder combination according to Claim 1 for producing coatings on any substrates.

6. Use of the binder combination according to Claim 1 for coating metallic substrates.

7. Preparation of the binder combination from components a) to c) according to Claim 1, **characterized in that** the silane component c) is added to the polyisocyanate component b) before the mixture of b) and c) is dispersed with the aqueous, hydroxy-functional resin dispersion a) containing acid groups.

## Revendications

1. Combinaison de liants consistant en
a) 30 à 95 % en masse d'une dispersion aqueuse de résine hydroxy-fonctionnelle contenant des groupes acides,
b) 5 à 70 % en masse d'un composant polyisocyanate ayant une teneur en groupes isocyanates libres de 5 à 50 % en masse et une viscosité de 5 à 10 000 mPa.s (à 23°C et D = 40s⁻¹) et
c) 0,1 à 10 % en masse d'un composant silane de formule générale (I) 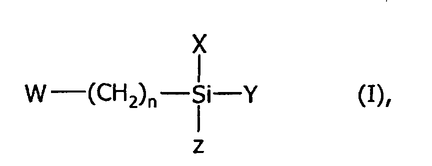 où
W représente le reste 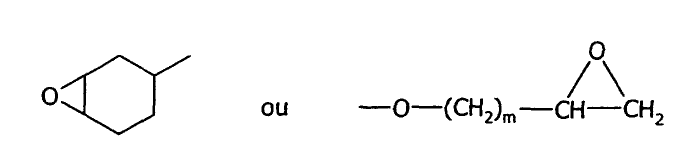 (avec m = 1 à 4) et
n représente un nombre entier de 2-4 et
X, Y, Z représentent indépendamment les uns des autres des restes organiques identiques ou différents ayant 1 à 30 atomes de carbone, à condition qu'au moins l'un des restes représente un groupe alcoxy ayant 1 à 4 atomes de carbone,
**caractérisée en ce que** le rapport molaire des groupes hydroxyle du composant a) aux groupes isocyanate du composé b) est situé entre 0,2:1 et 3:1 et où la somme des pour-cent en masse de a) à c) est égale à 100.

2. Combinaisons de liants selon la revendication 1, **caractérisées en ce que**, dans le composant silane c) de formule générale (I) 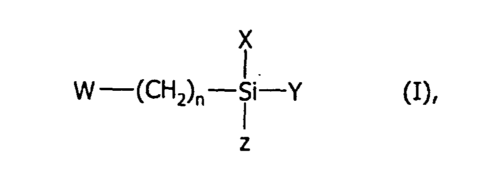
W représente le reste 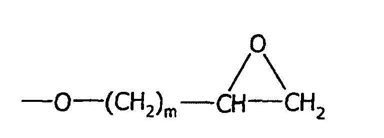
n représente 3 et
X, Y, Z représentent indépendamment les uns des autres des groupes méthoxy ou éthoxy.

3. Combinaisons de liants selon la revendication 1, **caractérisées en ce que** le composant silane c) est le (3-glycidoxypropyl)triméthoxysilane.

4. Combinaison de liants selon la revendication 1, **caractérisée en ce que**, dans le composant silane c) de formule générale (I) 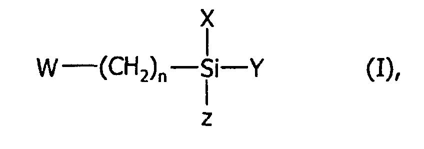
W représente le reste 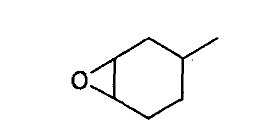
n représente 2 et
X, Y, Z représentent indépendamment les uns des autres des groupes méthoxy ou éthoxy.

5. Utilisation de la combinaison de liants selon la revendication 1 pour la production de revêtements sur des substrats quelconques.

6. Utilisation de la combinaison de liants selon la revendication 1 pour le revêtement de substrats métalliques.

7. Production de la combinaison de liants constituée par les composants a) à c) selon la revendication 1, **caractérisée en ce que** le composant silane c) est ajouté au composant polyisocyanate b) avant que la dispersion du mélange de b) et c) avec la dispersion aqueuse de résine hydroxy-fonctionnelle contenant des groupes acides a) n'ait lieu.
